# FASCICULE DE BREVET EUROPEEN

(11) **EP 1 945 995 B1**
(45) Date de publication et mention de la délivrance du brevet: **17.03.2010**
(21) Numéro de dépôt: 06829954.4
(22) Date de dépôt: 08.11.2006
(51) Int. Cl.: F16M 11/04

(54) **SYSTEME DE POSITIONNEMENT D'UN COMPOSANT, OUTILLAGE DE REGLAGE ET PROCEDE DE REGLAGE**
SYSTEM ZUR POSITIONIERUNG EINER KOMPONENTE UND ZUR WERKZEUGEINSTELLUNG SOWIE EINSTELLUNGSVERFAHREN
SYSTEM FOR POSITIONING A COMPONENT, ADJUSTING TOOLING AND ADJUSTMENT METHOD

(30) Priorité: 10.11.2005 FR 0553429
(43) Date de publication de la demande: 23.07.2008
(73) Titulaire: COMMISSARIAT A L'ENERGIE ATOMIQUE, 75015 Paris (FR)
(72) Inventeur: FAYOLLAS, Philippe, F-33110 Le Bouscat (FR); MACIAS, François, F-33380 Mios (FR)
(74) Mandataire: Ilgart, Jean-Christophe
(86) Numéro de dépôt international: PCT/EP2006/068221
(87) Numéro de publication internationale: WO 2007/054509

(56) Documents cités:
- DE-U1- 8 805 356
- DE-U1-202004 020 341
- GB-A- 826 228
- US-A- 4 390 172

## Description

### DOMAINE TECHNIQUE

L'invention concerne un système de positionnement d'un composant sur un bâti par rapport à une référence, un outillage de réglage de la position de ce composant et un procédé de réglage de la position de trois ensembles à vé et de trois ensembles à bille.

### ÉTAT DE LA TECHNIQUE ANTÉRIEURE

Il est connu, pour positionner des composants optiques, d'utiliser des systèmes isostatiques actifs, c'est-à-dire manipulables par des mécanismes précis tel que des tables simples et croisées équipées de vis à pas fin.

Parmi ces systèmes actifs, le plus couramment utilisé est le TPP (Trait, Point, Plan) car il est très simple à mettre en oeuvre. Ces systèmes sont souvent réalisés avec trois éléments à billes, elles aussi réglables. Dans des dispositifs de ce type, il y a autant de mécanismes de réglage que de composants à positionner. Une fois réglés, les mécanismes ne sont plus utilisés et les dispositifs actifs n'assurent plus qu'une fonction de liaison.

Si le nombre de composants est peu important, cet inconvénient est mineur. En revanche, si le nombre de composants à régler est important, le coût est fortement augmenté.

Par ailleurs le document US-A-4390172 décrit un système de positionnement d'un composant sur un bâti par rapport à une référence comportant:
- un ensemble à bille constitué d'une tige, d'une bille solidaire de la tige,
- un emsemble à vé constitué d'une tige, d'un vé solidaire de la tige.

### EXPOSÉ DE L'INVENTION

La présente invention a pour objet un système de positionnement, un outillage de réglage et un procédé de réglage qui remédient à ces inconvénients en fournissant un système qui, tout en étant peu coûteux, ne sacrifie pas la précision du réglage.

Le système de positionnement est caractérisé par :
- un ensemble à bille, constitué d'une tige, d'une bille solidaire de la tige et d'un système de serrage à rotule monté sur la tige pour immobiliser l'ensemble à bille par rapport au composant ;
- un ensemble à vé constitué d'une tige, d'un vé solidaire de la tige et d'un système de serrage à rotule monté sur la tige pour immobiliser l'ensemble à vé par rapport à un bâti ;
- un élément de liaison élastique pour maintenir la bille appliquée sur le vé.

Avantageusement, le système de serrage à rotule est constitué de deux rondelles sphériques concaves, de deux rondelles sphériques convexes et de deux écrous pour serrer les rondelles concaves et les rondelles convexes l'une sur l'autre.

L'élément de liaison peut être une cloche de couplage filetée. À titre d'exemple, le composant est un composant optique laser.

L'outillage de réglage de la position d'un composant est caractérisé par le fait qu'il comporte d'une part un cadre qui s'adapte autour du composant et, d'autre part, une plaque de fond amovible qui peut être solidarisée au cadre lorsque le composant est placé dans le cadre, le cadre et la plaque de fond comportant des vis de réglage permettant de déplacer avec précision le composant par rapport à l'outillage, le cadre et la plaque de fond comportant des vis de bridage permettant de fixer la position du composant par rapport à l'outillage une fois qu'une position voulue a été obtenue.

Selon le procédé de réglage de la position de trois ensembles à vé :
- on monte un composant maître équipé de trois ensembles à cylindre dans un outillage selon l'invention, chaque ensemble à cylindre comprenant une tige et un cylindre solidaire de la tige, le diamètre du cylindre étant égal au diamètre d'une bille faisant partie d'un ensemble à bille selon l'invention, les tiges de ces systèmes de serrage étant bridées sur le composant maître par un système de serrage à rotule (de type concave, convexe), chacun des trois ensembles à vé dont la position est à régler étant monté sur un cylindre des ensembles à cylindre par l'intermédiaire d'un élément de liaison ;
- on précentre les brides sur les traverses à l'aide de l'outillage de précentrage ;
- on vient fixer les brides ;
- on en lève l'outillage de précentrage ;
- on monte les tiges des ensembles à vé dans trois trous traversant formés dans la nacelle et on bride l'outillage de réglage sur la nacelle ;
- on règle la position du composant maître par rapport à une référence au moyen de l'outillage de réglage ;
- lorsque le composant maître est dans la position voulue par rapport à la référence, on bride chacun des trois ensembles à vé dans la position qu'il occupe au moyen de son système de serrage à rotule ;
- on débride l'outillage de réglage de la nacelle et on le dépose du composant maître.

Selon le procédé de réglage de la position de trois ensembles à bille :
- on règle la position de trois ensembles à vé par rapport à un banc de réglage au moyen d'un composant maître par le procédé décrit plus haut ;
- on équipe le composant des trois ensembles à bille dont on veut régler la position et on le monte dans un outillage de réglage selon l'invention ;
- on précentre les brides ;
- on enlève l'outillage de précentrage ;
- on met en contact chacune des billes dans les vés réglés au moyen du composant maître et on bride l'outillage de réglage sur le banc de réglage ;
- on règle la position du composant par rapport à une référence au moyen de l'outillage de réglage ;
- lorsque le composant est dans la position voulue par rapport à la référence, on bride chacun des trois ensembles à bille dans la position qu'il occupe au moyen de son système de serrage à rotule ;
- on déverrouille les cloches de verrouillage ;
- on débride l'outillage de réglage du banc de réglage et on le dépose du composant ;
- on met le composant en place sur la nacelle.

Une fois que le composant a été réglé sur le banc, il peut être positionné sur les vés de la nacelle sans en changer la position car les ensembles à vé de la nacelle ont été réglés de la même manière que les ensembles à vé du banc à partir du même composant maître. C'est ce qui garantit l'interchangeabilité des composants.

### BRÈVE DESCRIPTION DES DESSINS

D'autres caractéristiques et avantages de l'invention apparaîtront encore à la lecture de la description qui suit d'un exemple de réalisation donné à titre illustratif en référence aux figures annexées.

Sur ces figures :
- la figure 1 est une vue en coupe d'un système de positionnement d'un composant conforme à l'invention ;
- la figure 2 est une vue en trois dimensions de l'ensemble à billes faisant du système de positionnement de la figure 1 ;
- les figures 3 et 4 sont respectivement une vue arrière et une vue de face d'un composant optique équipé de trois ensembles à bille de la figure 2 ;
- la figure 5 est une vue de côté du composant optique des figures 3 et 4 montées sur les traverses d'une nacelle à l'aide du système de positionnement de la figure 1 ;
- la figure 6 est une vue tridimensionnelle d'un composant maître équipé de trois ensembles à cylindre ;
- la figure 7 est une vue de détail de l'interface cylindre du composant maître de la figure 6 ;
- les figures 8 et 9 sont respectivement une vue du cadre et une vue de la plaque de fond de l'outillage de réglage des TTT ;
- la figure 10 est une vue de l'outillage de réglage des TTT des figures 8 et 9 assemblé à vide ;
- la figure 11 est une vue arrière de l'outillage de réglage des TTT contenant le composant maître de la figure 6 ;
- la figure 12 est une vue en perspective d'un outillage de pré centrage des brides ;
- les figures 13 et 14 sont respectivement une vue de face et une vue de côté de l'outillage de la figure 11 monté sur des traverses d'une nacelle ;
- les figures 15 à 20 sont des schémas qui illustrent les étapes successives du réglage d'un ensemble Trait Trait Trait (TTT) au moyen du composant maître de la figure 6.

### EXPOSÉ DÉTAILLÉ DE MODES DE RÉALISATION PARTICULIERS

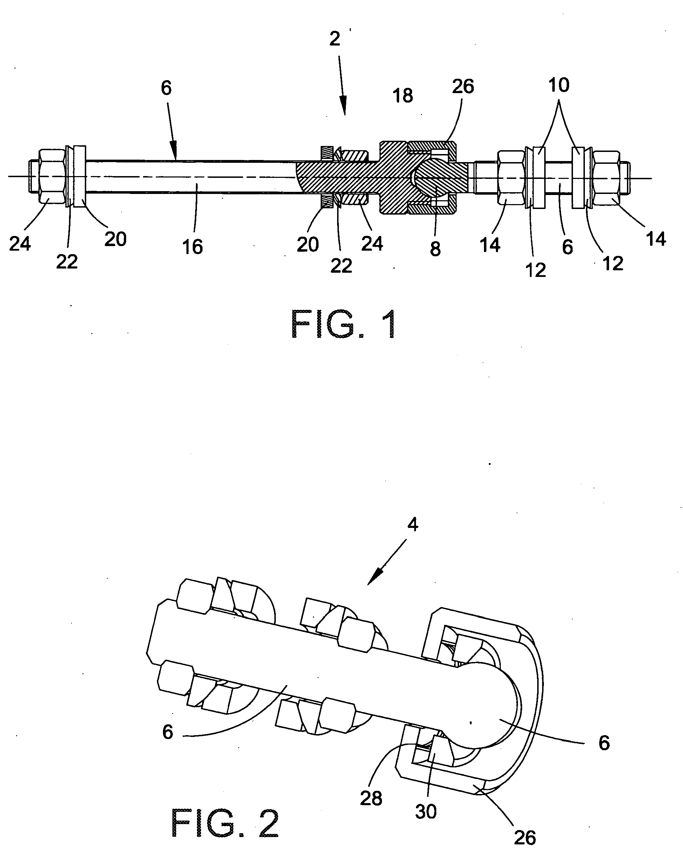

Sur la figure 1, le système de positionnement d'un composant de l'invention, désigné par la référence générale 2, comprend d'une part un ensemble à bille 4 et un ensemble à vé 6. L'ensemble à bille 4, représenté plus en détails sur la figure 2, comprend une interface à bille constituée d'une tige 6 et d'une bille 8 solidaire de la tige. A titre d'exemple, le diamètre de la tige 6 peut être de 12 mm et le diamètre de la bille de 15 mm. Un système de serrage à rotule est monté sur la tige 6 pour immobiliser l'ensemble à bille par rapport à un composant que l'on désire positionner par rapport à une référence. Dans l'exemple représenté, le système de serrage à rotule est constitué de deux rondelles sphériques concaves 10, de deux rondelles sphériques convexes 12 et de deux écrous 14. Le composant est serré entre les deux rondelles concaves 10.

De manière similaire, l'ensemble à vé 6 est constitué d'une interface à vé comprenant une tige 16 solidaire d'un vé 18. Un système de serrage à rotule est monté sur la tige 16 pour immobiliser l'ensemble à vé par rapport à un bâti. Dans l'exemple représenté, le système de serrage à rotule est identique à celui de l'ensemble à billes. Il est composé de la même manière de deux rondelles sphériques concaves 20, de deux rondelles sphériques convexes 22 et de deux écrous 24. Le bâti est intercalé entre les deux rondelles sphériques concaves 20.

La bille 8 de l'ensemble à bille 4 vient se mettre en place dans le vé 18 de l'ensemble à vé 6. La bille et le vé sont maintenus en contact l'un avec l'autre au moyen d'un élément de liaison, par exemple une cloche de couplage filetée 26. Afin d'éviter de précontraindre la liaison de la bille et du vé, un ressort ou une rondelle élastique 28 est montée sous une rondelle de contact 30 de manière à appliquer élastiquement la bille dans le vé.

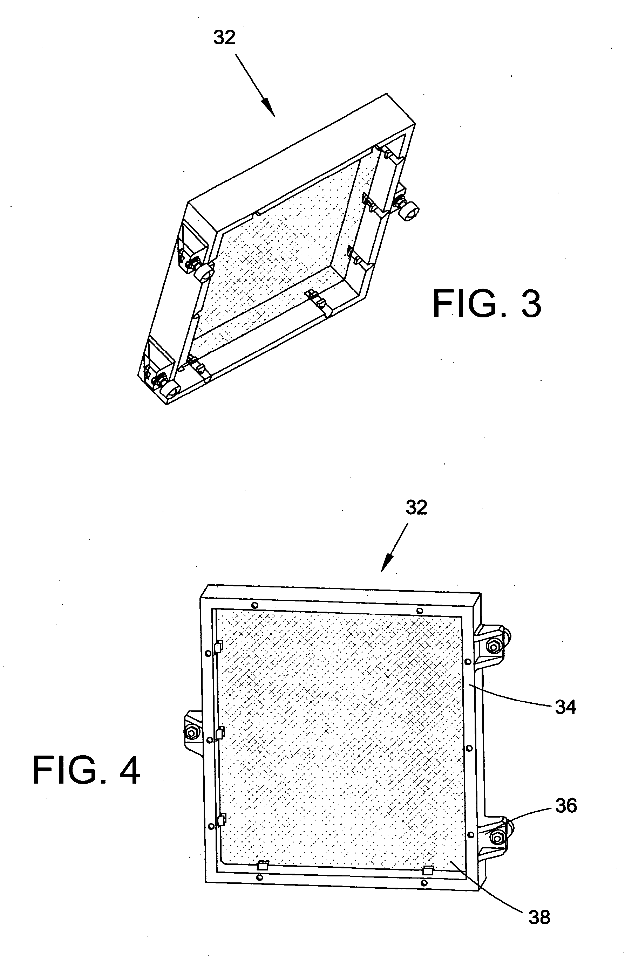

Sur les figures 3 et 4 le composant optique que l'on désire positionner, désigné dans son ensemble par la référence 32, est constitué d'une monture 34 comportant trois oreilles 36. Un élément optique 38 est fixé dans la monture 34. Chacune des oreilles 36 est percée d'un trou traversant. La tige 6 de l'ensemble à bille 4 est insérée dans ce trou traversant et l'oreille est serrée entre les deux rondelles concaves 10 du système de serrage à rotule afin d'immobiliser l'ensemble à bille par rapport au composant 32.

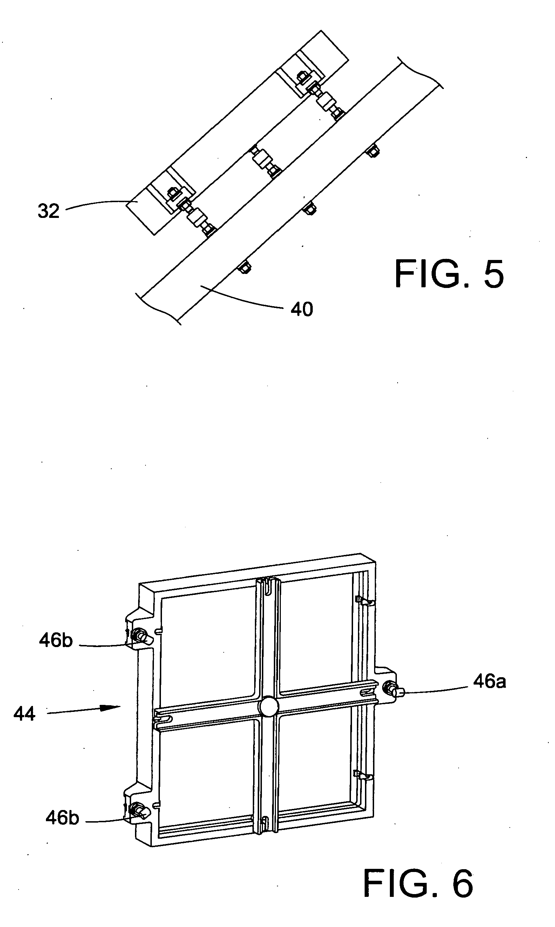

Sur la figure 5, le composant 32 est monté sur des traverses parallèles 40 (une seule traverse est visible sur la figure 5) d'une nacelle constituant un bâti au moyen du système de positionnement complet. Deux ensembles à vé ont été montés sur une traverse et un troisième ensemble à vé a été monté sur une traverse parallèle. De la même manière que pour le composant 32, des trous traversant sont prévus dans les traverses 40 de la nacelle. La tige 16 de chacun des ensembles à vé 6 est insérée dans l'un de ces trous traversant et l'ensemble à vé est immobilisé par rapport à la traverse au moyen du système de serrage à rotule, de la même manière que précédemment en vissant les écrous 24 de manière à serrer les rondelles concaves 20 sur la traverse. Afin de rigidifier l'ensemble, on peut avantageusement prévoir un insert dans la traverse pour éviter son écrasement.

Etant donné que les trous prévus dans les oreilles 36 du composant 32 et les trous prévus dans la traverse 40 de la nacelle ont un diamètre supérieur au diamètre des tiges 6 et 16, chaque tige peut pivoter de quelques degrés, par exemple plus ou moins 3°, par rapport au composant ou par rapport à la nacelle. Chaque tige 6 ou 16 possède donc 6 degrés de liberté.

On a représenté sur la figure 6 une vue en perspective du composant maître 44. Ce composant joue un rôle essentiel dans le procédé de l'invention parce qu'il est unique et parce que, une fois créé, il sert à régler l'ensemble des interfaces à vé.

Le fait qu'il existe un seul composant maître permet de s'affranchir d'un certain nombre de tolérances parce que les mêmes défauts sont reproduits sur tous les composants et, de la sorte; ces défauts s'annulent.

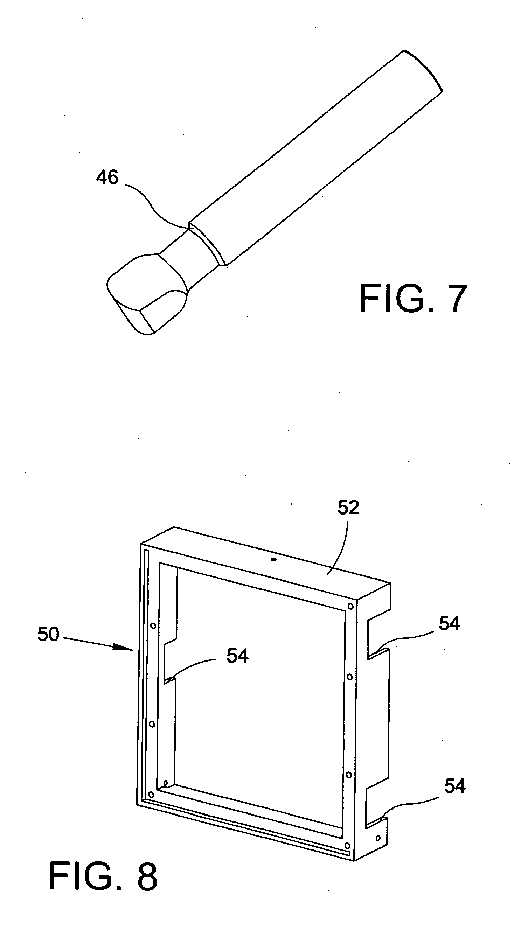

Le composant maître est similaire au composant optique 32 des figures 3 et 4 à l'exception du fait que l'ensemble à bille est remplacé par un ensemble à cylindre (voir figure 7). Les cylindres servent à l'orientation des vés afin qu'ils aient tous la même direction que le maître. Par exemple, le cylindre 46a possède un axe horizontal, le cylindre 46b possède un axe dirigé vers le bas avec une certaine inclinaison, par exemple de 45° et le cylindre 46c possède un axe dirigé vers le haut avec une certaine inclinaison, par exemple de 45° également (selon la figure 6). De cette manière, les axes des cylindres 46a, 46b et 46c sont concourants au centre de l'élément de telle sorte que, ultérieurement, au moment du réglage, les arêtes des vés seront également concourantes.

Par ailleurs, ce qui caractérise avant tout le composant maître, c'est qu'il doit nécessairement être créé de manière absolue, et non pas de manière relative. La qualité de reproduction d'un composant maître est primordiale car cela évite, en cas de casse, d'avoir à régler à nouveau l'ensemble des interfaces Trait Trait Trait ce qui n'est pas concevable en terme de maintenance.

Un banc de réglage est nécessaire pour le réglage du composant maître. Différentes méthodes peuvent être utilisées pour réaliser ce réglage. L'élément optique du composant maître peut d'abord servir à un réglage en autocollimation pour assurer le parallélisme avec un masque qui sert de référence sur le banc (réglage de l'inclinaison suivant deux axes XY concourants). Pour réaliser le centrage, l'élément optique pourra avoir des traits gravés verticalement et horizontalement. Ces traits pourront également servir au règlage de l'écartement par rapport au masque en comparant le mouvement du réticule d'un théodolite témoin ou non d'un tilt parasite selon l'axe z. Enfin, pour l'écartement selon l'axe z, on utilisera la fonction de télémétrie du théodolite pour réaliser cette mesure. Afin d'avoir suffisamment de flux réfléchi sur l'optique, une partie de l'élément optique sera métallisée autour du centre optique. On peut aussi utiliser un miroir.

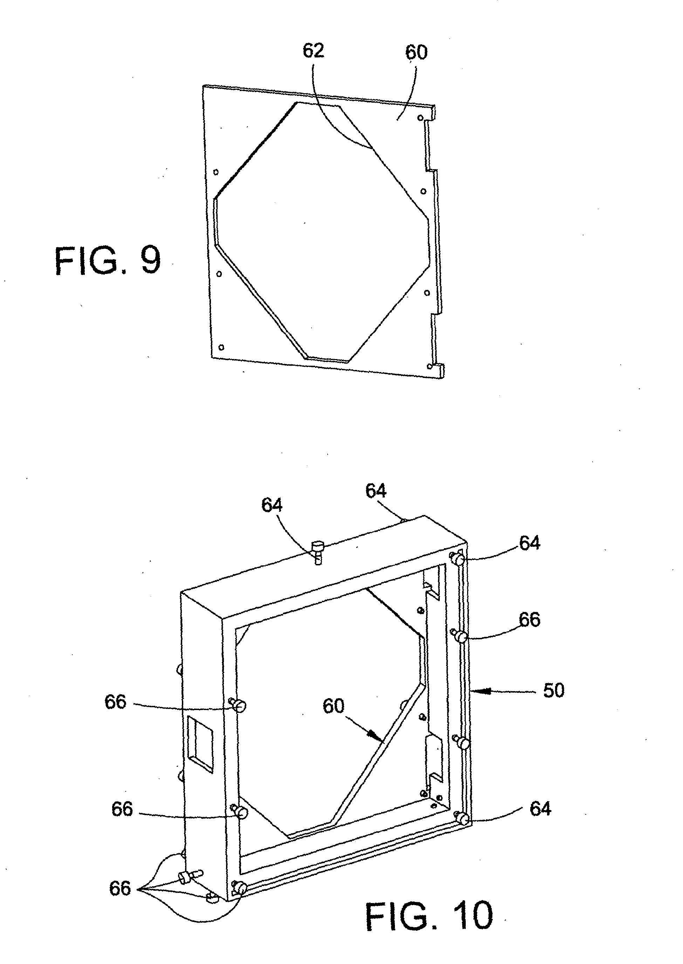

On a représenté sur la figure 8 une partie principale de l'outillage 50. Elle est constituée d'un cadre qui s'adapte autour du composant, par exemple le composant des figures 3 et 4 ou le composant maître de la figure 6. Le cadre comporte quatre côtés dont deux côtés opposés présentent des échancrures pour permettre le passage des oreilles 36 des composants. La plaque de fond 60 représentée sur la figure 9 peut être adaptée sur le cadre 50 et fixée par des vis. Elle présente un évidement 62 de forme octogonale comportant quatre grands côtés et quatre petits côtés.

On a représenté sur la figure 10 la plaque de fond 60 assemblée au cadre 50. Le cadre comporte des vis de réglage qui permettent de régler la position du composant lorsque celui-ci est à l'intérieur du cadre. Dans l'exemple, les vis de réglage sont de type Norelem ou Newport. Le cadre comporte d'autre part des vis de bridage 66 qui permettent de conserver la position du composant par rapport au cadre après réglage. Les vis 66 sont de préférence des vis à tête rotulée.

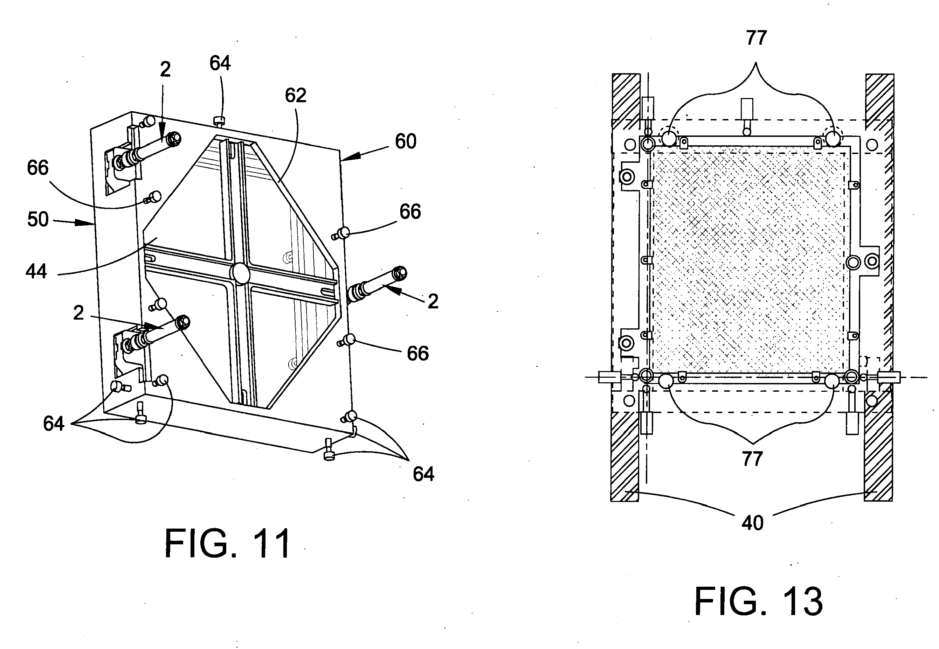

On a représenté sur la figure 11 le composant maître 44 monté à l'intérieur de l'outillage de réglage. Sur cette figure, le composant maître 44 est équipé de systèmes de positionnement complets, c'est-à-dire comportant les ensembles à bille à les ensembles à vé solidarisés par les cloches de couplage.

De même que le composant maître, l'outillage de réglage représenté sur les figures 8 à 11 est unique. Le même outillage de réglage est utilisé pour l'ensemble des composants. Toutes les fonctions de réglages sont reportées sur cet outillage de telle sorte que les composants ne conservent qu'un rôle passif. Dans le même esprit, l'outillage est fixé sur un bâti, par exemple une nacelle au moyen de brides 70 de type serre-joint. De cette manière, un seul jeu de brides est suffisant. La fixation des brides s'effectue au moyen d'un outillage de pré-centrage 72. Les brides 70, par exemple trois, sont montées sur l'outillage de pré-centrage 70 au moyen de vis. L'outillage comporte au moins deux tiges de pré-centrage 74 qui viennent se placer dans deux des trois trous formés dans le bâti et prévus pour la réception ultérieure des tiges 16 de l'ensemble à vé. De cette manière, l'outillage de pré-centrage est situé sensiblement dans la position qui doit être celle de l'outillage. Dans cette position, on serre les brides sur les traverses 40 de la nacelle de manière à les bloquer. On retire ensuite la plaque de pré-centrage 72 et on vient fixer l'outillage à sa place.

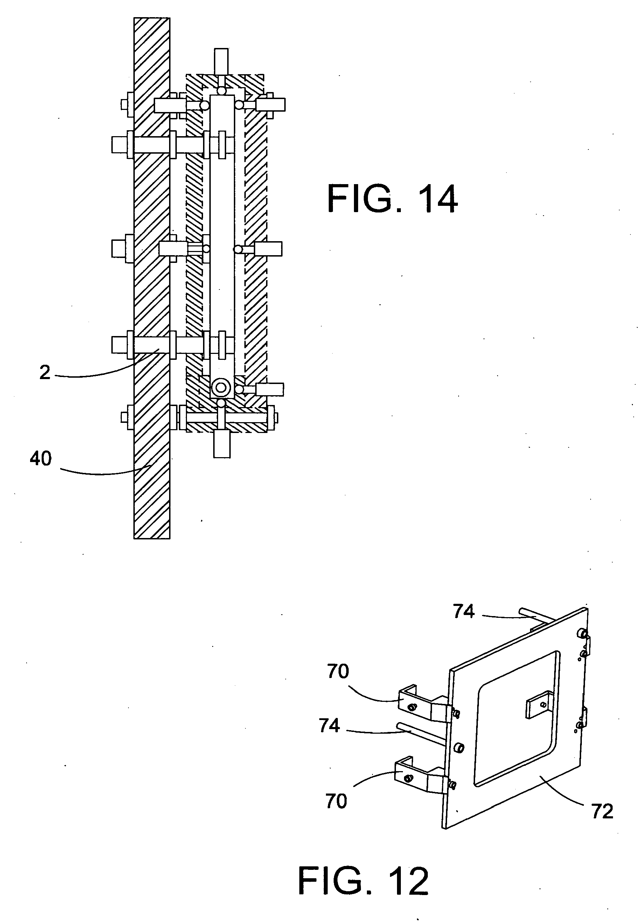

On a représenté sur les figures 13 et 14, respectivement une vue de face et une vue de côté de l'outillage comportant le composant maître monté sur les traverses 40 d'une nacelle.

La référence 77 désigne des mires qui sont montées sur le composant maître afin de régler sa position par rapport à une référence comme on l'expliquera ultérieurement. On peut utiliser aussi des miroirs ou des coins cube ou des réflecteurs.

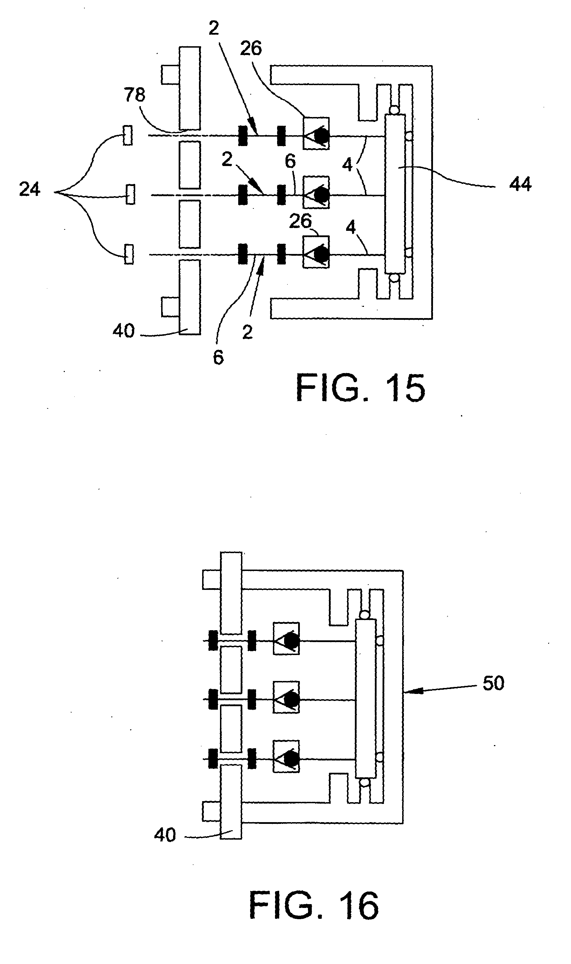

Les différentes étapes du réglage de la position de trois ensembles à vé 6 selon le procédé de l'invention seront maintenant explicitées en référence aux figures 15 à 20. Sur la figure 15, après avoir effectué préalablement la phase de précentrage des brides, le composant maître 44 est monté à l'intérieur de l'outillage de réglage, comme représenté sur la figure 11. Dans cette position, il est équipé de trois systèmes de positionnement 2 conformes à l'invention, et constitués chacun d'un ensemble à cylindre et d'un ensemble à vé 6 liés par une cloche de couplage 26. L'écrou 24 situé à l'extrêmité de la tige 16 ainsi que les rondelles concave et convexe associées à cet écrou sont retirées de manière à permettre d'introduire les tiges 16 dans les trous 78 formés dans la nacelle. Sur la figure 15, les trois trous ont été représentés alignés par souci de simplification mais il va de soi que dans la réalité deux trous sont formés sur une traverse et un troisième trou est formé sur une traverse parallèle de manière que les trous 78 ne soient pas alignés.

Sur la figure 16, les tiges 16 ayant été introduites dans les trous 78, on remet en place la rondelle concave 20 et la rondelle convexe 22 qui ont été retirées, puis l'écrou 24, sans le serrer et on bride l'outillage de réglage 50 sur la traverse 40 au moyen des brides 70 dont le fonctionnement a été décrit en référence à la figure 12.

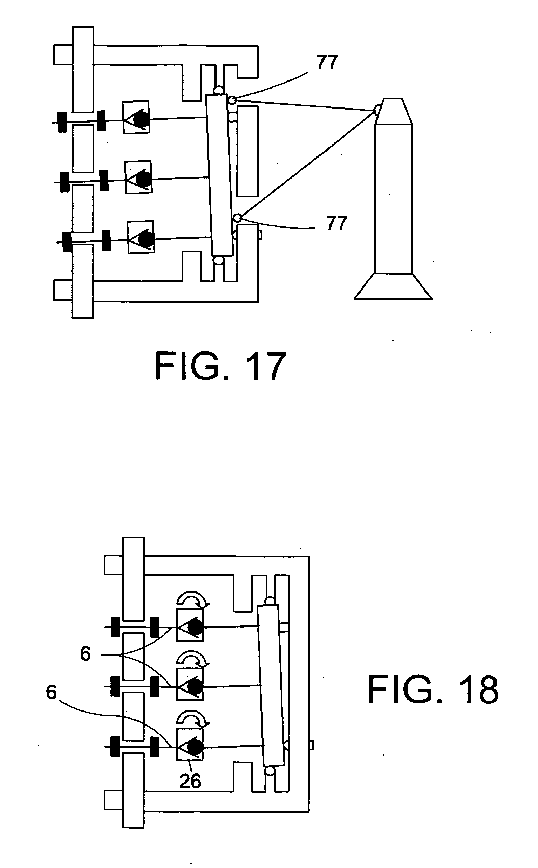

Sur la figure 17 la position du composant maître 44 est réglée au moyen des vis de réglage par rapport à une référence au moyen, par exemple, d'un tracker ou d'un théodolite.

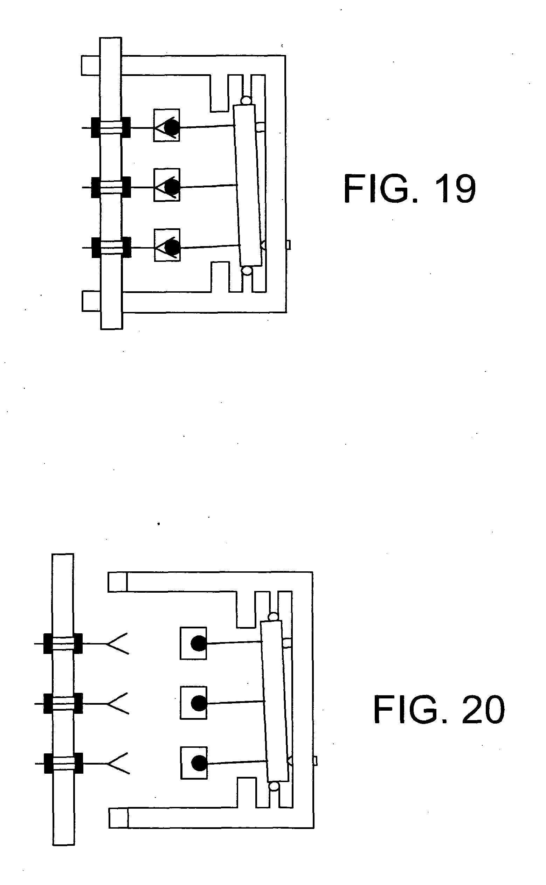

La position du composant maître est réglée à l'aide des mires 77. Il suffit alors de les immobiliser dans cette position au moyen des vis de blocage pour que l'opération de réglage soit terminée. Pour cela, on serre dans un premier temps l'élément de liaison 26 pour maintenir le cylindre appliqué sur le vé puis on serre le système de serrage prévu de part et d'autre de la traverse 40 de la nacelle. Il est important, à ce stade, de serrer les deux écrous 24 de manière équilibrée afin de ne pas provoquer un déplacement de la tige 16 par rapport à la position réglée qu'elle occupe. Les tiges 16 ayant été verrouillées en position, l'opération de réglage des vés est terminée et il ne reste plus qu'à retirer l'outillage de réglage et le composant maître. Pour cela, on désolidarise les cloches de couplage 26, on débride l'outillage et on le retire (figure 20).

Ces opérations ayant été accomplies, l'outillage est disponible pour une nouvelle opération de réglage. On peut ainsi, à l'aide du même outillage, du même composant maître, et des mêmes brides procéder au réglage successif d'un grand nombre d'ensembles à vé.

Tous les ensembles à vé ayant été réglés, il reste à procéder au réglage des composants optiques. Cette opération peut s'effectuer en base arrière, c'est-à-dire dans un atelier de métrologie de telle sorte que les composants sont amenés sur le site tout réglés.

Pour effectuer cette opération on commence par créer un ensemble à vé maître au moyen du composant maître sur un banc en utilisant le procédé qui vient d'être décrit en référence aux figures 15 à 20. On équipe chaque composant que l'on souhaite positionner de trois ensembles à bille dont on veut régler la position et on monte ce composant dans un outillage de réglage exactement comme on l'a fait pour le composant maître. On bride l'outillage ou le banc de réglage et on met en contact chacune des billes avec un vé de l'ensemble à vé maître. On règle la position du composant par rapport à la même référence que celle par rapport à laquelle on a réglé le composant maître par la même méthode, par exemple au moyen d'un tracker ou d'un théodolite. Pour cela, on déplace le composant par rapport à l'outillage de réglage au moyen des vis de réglage lorsque le composant est dans la position voulue par rapport à la référence, les ensembles à bille sont dans la position souhaitées et il suffit de les brider dans la position qu'ils occupent en serrant le système de serrage à rotule monté sur la tige 6. De la même manière que pour les ensembles à vé, il faut prendre garde de serrer les écrous 14 de manière équilibrée afin de ne pas modifier la position des tiges. La position des ensembles à bille par rapport au composant est alors fixée et il ne reste plus qu'à démonter l'outillage de réglage. Pour cela, on le débride du banc de réglage et on le retire du composant. On sépare les billes des ensembles à bille du composant des vés ensemble à vé maître du banc de réglage. L'outillage de réglage et l'ensemble à vé maître sont alors disponibles pour régler un autre composant. On peut ainsi régler la totalité des composants. Une fois qu'un composant est réglé sur le banc, il peut être positionné sur la nacelle sans aucun outillage de réglage car les interfaces trait ont été réglées de la même manière sur le banc de réglage que le composant maître sur la nacelle à partir du même composant maître. C'est ce qui garantit l'interchangeabilité des composants. Un composant quelconque peut être placé sur n'importe lequel des ensembles à vé de la nacelle.

Dans l'exemple qui vient d'être décrit, les ensembles à vé sont sur la nacelle tandis que les ensembles à bille sont sur le composant. Toutefois, il est bien entendu que cette disposition n'est pas impérative et que l'on pourrait avoir au contraire des ensembles à bille sur la nacelle et des ensembles à vé sur le composant sans que le procédé et le dispositif de l'invention soient modifiés.

## Revendications

1. Système de positionnement d'un composant sur un bâti par rapport à une référence, **caractérisé par** :
- un ensemble à bille (4), constitué d'une tige (6), d'une bille (8) solidaire de la tige (6) et d'un système de serrage à rotule (10, 12) monté sur la tige pour immobiliser l'ensemble à bille par rapport au composant ;
- un ensemble à vé constitué d'une tige (16), d'un vé (18) solidaire de la tige (16) et d'un système de serrage à rotule (20, 22) monté sur la tige pour immobiliser l'ensemble à vé par rapport au bâti ;
- un élément de liaison élastique (26) pour maintenir la bille (8) appliquée sur le vé (18).

2. Système de positionnement selon la revendication 1, **caractérisé en ce que** le système de serrage à rotule est constitué de deux rondelles sphériques concaves (10), de deux rondelles sphériques convexes (12) et de deux écrous (14) pour serrer les rondelles concaves et les rondelles convexes l'une sur l'autre.

3. Système de positionnement selon la revendication 1 ou 2, **caractérisé en ce que** l'élément de liaison est une cloche de couplage filetée (26).

4. Système de positionnement selon l'une des revendications 1 à 3, **caractérisé en ce que** le composant est un composant optique laser.

5. Outillage de réglage de la position d'un composant, **caractérisé en ce qu'**il comporte d'une part un cadre (50) qui s'adapte autour du composant et, d'autre part, d'une plaque de fond (60) amovible qui peut être solidarisée au cadre (50) lorsque le composant (32, 44) est placé dans le cadre, le cadre et la plaque de fond comportant des vis micrométriques d'ajustement (64) permettant de déplacer avec précision le composant par rapport à l'outillage, le cadre et la plaque de fond comportant des vis de bridage (66) permettant de fixer la position du composant par rapport à l'outillage une fois qu'une position voulue a été obtenue.

6. Procédé de réglage de la position de trois ensembles à vé selon l'une des revendications 1 à 4 par rapport à une nacelle, **caractérisé en ce que :**
- on monte un composant maître (44) équipé de trois ensembles à cylindre dans un outillage (50, 60) selon la revendication 5, chaque ensemble à cylindre comprenant une tige et un cylindre solidaire de la tige, le diamètre du cylindre étant égal au diamètre d'une bille faisant partie d'un ensemble à bille selon l'une des revendications 1 à 4, les tiges de ces systèmes de serrage étant bridées sur le composant maître par un système de serrage à rotule, chacun des trois ensembles à vé dont la position est à régler étant monté sur un cylindre des ensembles à cylindre par l'intermédiaire d'un élément de liaison ;
- on monte les tiges des ensembles à vé dans trois trous traversant (78) formés dans la nacelle (40) et on bride l'outillage de réglage (50, 60) sur la nacelle ;
- on règle la position du composant maître (44) par rapport à une référence au moyen de l'outillage de réglage (50, 60) ;
- lorsque le composant maître (44) est dans la position voulue par rapport à la référence, on bride chacun des trois ensembles à vé dans la position qu'il occupe au moyen de son système de serrage à rotule ;
- on débride l'outillage de réglage (50, 60) de la nacelle et on le dépose du composant maître.

7. Procédé de réglage de la position de trois ensembles à bille par rapport à un composant (34) **caractérisé en ce que :**
- on règle la position de trois ensembles à vé par rapport un banc de réglage au moyen d'un composant maître (44) par le procédé de la revendication précédente ;
- on équipe le composant (34) des trois ensembles à bille dont on veut régler la position et on le monte dans un outillage de réglage (50, 60) selon la revendication 5 ;
- on met en contact chacune des billes dans les vés réglés au moyen du composant maître (44) et on bride l'outillage de réglage (50, 60) sur le banc de réglage ;
- on règle la position du composant par rapport à une référence au moyen de l'outillage de réglage ;
- lorsque le composant est dans la position voulue par rapport à la référence, on bride chacun des trois ensembles à bille dans la position qu'il occupe au moyen de son système de serrage à rotule ;
- on déverrouille les cloches de verrouillage
- on débride l'outillage de réglage (50, 60) du banc de réglage et on le dépose du composant ;
- on met le composant en place sur la nacelle.

## Claims

1. System for positioning a component on a frame relative to a reference, **characterised by**:
- a ball assembly (4), composed of a rod (6), a ball (8) fixed to the rod (6) and a ball joint clamping system (10, 12) mounted on the rod to fix the ball assembly relative to the component;
- a vee assembly composed of a rod (16), a vee (18) fixed to the rod (16) and a ball joint clamping system (20, 22) mounted on the rod to fix the vee assembly relative to the frame;
- an elastic connecting element (26) to keep the ball (8) in contact with the vee (18).

2. Positioning system according to claim 1, **characterised in that** the bail joint clamping system is composed of two concave spherical washers (10), two convex spherical washers (12) and two nuts (14) to clamp the concave washers and convex washers to each other.

3. Positioning system according to claim 1 or 2, **characterised in that** the connecting element is a threaded coupling bell (26).

4. Positioning system according to one of claims 1 to 3, **characterised in that** the component is an optical laser component.

5. Adjustment tooling for positioning a component, **characterised in that** it comprises firstly a frame (50) that adapts around the component, and secondly a removable bottom plate (60) that may be fixed to the frame (50) when the component (32, 44) is placed in the frame, the frame and the bottom plate comprising micrometric adjustment screws (64) to displace the component precisely relative to the tooling, the frame and the bottom plate comprising clamping screws (66) used to fix the component in position relative to the tooling once a required position has been obtained.

6. Adjustment method for positioning three vee assemblies according to one of claims 1 to 4 relative to a pod, **characterised in that**:
- a master component (44) is installed fitted with three assemblies provided with cylinders in a tooling (50, 60) according to claim 5, each assembly provided with a cylinder comprising a rod and a cylinder fixed to the rod, the diameter of the cylinder being equal to the diameter of a ball forming part of a ball assembly according to one of claims 1 to 4, the rods of these clamping systems being clamped onto the master component by a ball joint clamping system, each of the three vee assemblies for which the position is to be adjusted being mounted on a cylinder of the assemblies provided with cylinders through a connecting element;
- the rods of the vee assemblies are mounted in three through holes (78) formed in the pod (40) and the adjustment tooling (50, 60) is clamped on the pod;
- the position of the master component (44) is adjusted relative to a reference, using the adjustment tooling (50, 60);
- when the master component (44) is in the required position relative to the reference, each of the three vee assemblies is clamped in the position that it occupies using its ball joint clamping system;
- the pod adjustment tooling (50, 60) is released and disassembled from the master component.

7. Method for adjusting the position of three ball assemblies relative to a component (34) **characterised in that**:
- the position of the three vee assemblies relative to an adjustment bench is adjusted using a master component (44) and the method described above;
- the component (34) is fitted with three ball assemblies for which the position is to be adjusted and it is mounted in an adjustment tooling (50, 60) according to claim 5;
- the balls are brought into contact in the vees adjusted using the master component (44) and the adjustment tooling (50, 60) is clamped on the adjustment bench;
- the position of the component relative to a reference is adjusted using the adjustment tooling;
- when the component is in the required position relative to the reference, each of the three ball assemblies is clamped in the position that it occupies using its ball joint clamping system;
- the locking bells are released;
- the adjustment tooling (50, 60) of the adjustment bench is loosened and disassembled from the component;
- the component is put into place on the pod.

## Patentansprüche

1. System zur Positionierung einer Komponente auf einem Gestell in Bezug auf eine Referenz,
**gekenntzeichnet durch:**
- eine Kugeleinheit (4), gebildet durch eine Stange (6), eine Kugel (8) aus einem Stück mit der Stange (6), und ein auf die Stange montiertes Kugelgelenkklemmsystem (10, 12) zur Arretierung der Kugeleinheit in Bezug auf die Komponente;
- eine V-Element-Einheit, gebildet durch eine Stange (16), ein V-Element (18) aus einem Stück mit der Stange (16), und ein auf die Stange montiertes Kugelgelenkklemmsystem (20, 22) zur Arretierung der V-Element-Einheit in Bezug auf das Gestell;
- ein elastisches Verbindungselement (26), um die in dem V-Element (18) sitzende Kugel (8) festzuhalten.

2. Positionierungssystem nach Anspruch 1, **dadurch gekennzeichnet, dass** das Kugelgelenkklemmsystem gebildet wird durch zwei konkave kugelförmige Scheiben (10), zwei konvexe kugelförmige Scheiben (12) und zwei Schrauben (14), um die konkaven Scheiben und die konvexen Scheiben zusammenzuspannen.

3. Positionierungssystem nach dem Anspruch 1 oder 2, **dadurch gekennzeichnet, dass** das Verbindungselement eine gewindete Kupplungsglocke (26) ist.

4. Positionierungssystem nach einem der Ansprüche 1 bis 3, **dadurch gekennzeichnet, dass** die Komponente eine optische Laserkomponente ist.

5. Werkzeug zur Einstellung der Position einer Komponente, **dadurch gekennzeichnet, dass** es einerseits einen an die Komponente angepassten Rahmen (50) umfasst und andererseits eine herausnehmbare Grundplatte (60), die fest mit dem Rahmen (50) verbunden werden kann, wenn die Komponente (32, 44) in dem Rahmen angebracht wird, wobei der Rahmen und die Grundplatte Justier-Mikrometerschrauben (64) umfassen, die ermöglichen, die Komponente in Bezug auf das Werkzeug präzise zu verschieben, und der Rahmen und die Grundplatte Befestigungsschrauben (66) umfassen, die ermöglichen, die Position der Komponente in Bezug auf das Werkzeug zu fixieren, wenn eine erwünschte Position erreicht worden ist.

6. Verfahren zur Einstellung der Position von drei V-Element-Einheiten nach einem der Ansprüche 1 bis 4 in Bezug auf einen Träger, **dadurch gekennzeichnet, dass:**
- man eine Master-Komponente (44), ausgestattet mit drei Zylindereinheiten, in ein Werkzeug (50, 60) nach Anspruch 5 montiert, wobei jede Zylindereinheit eine Stange und einen mit der Stange verbundenen Zylinder umfasst, wobei der Durchmesser des Zylinders gleich dem Durchmesser einer Kugel ist, die Teil einer Kugeleinheit nach einem der Ansprüche 1 bis 4 ist, und die Stangen dieser Klemmsysteme durch ein Kugelgelenkklemmsystem an der Master-Komponente befestigt werden, wobei jede der drei V-Element-Einheiten, deren Position einzustellen ist, mittels eines Verbindungselements auf einen Zylinder der Zylindereinheiten montiert wird;
- man die Stangen der V-Element-Einheiten in drei Durchgangslöcher (78) montiert, ausgebindet in dem Träger (40), und man das Einstellwerkzeug (50, 60) auf dem Träger festspannt;
- man die Position der Master-Komponente (44) in Bezug auf eine Referenz mit Hilfe des Einstellwerkzeugs (50, 60) einstellt;
- man jede der drei V-Element-Einheiten in der Position, die sie einnimmt, mit Hilfe ihres Kugelgelenkklemmsystems festspannt, wenn die Master-Komponente (44) sich in der - bezogen auf die Referenz - erwünschten Position befindet;
- man das Einstellwerkzeug (50, 60) von dem Träger löst und die Master-Komponente von ihm abmontiert.

7. Verfahren zur Einstellung der Position von drei Kugeleinheiten in Bezug auf eine Komponente (34), **dadurch gekennzeichnet, dass**:
- man die Position der drei V-Element-Einheiten in Bezug auf eine Einstellbank mittels einer Master-Komponente (44) durch das Verfahren des vorangehenden Anspruchs einstellt;
- man die Komponente (34) mit den drei Kugeleinheiten ausrüstet, deren Position man einstellen will, und man sie in ein Einstellwerkzeug (50, 60) nach Anspruch 5 montiert;
- man jede der Kugeln in den mit Hilfe der Master-Komponente (44) eingestellten V-Einheiten in Kontakt bringt und man das Einstellwerkzeug (50, 60) auf der Einstellbank festspannt;
- man die Position der Komponente in Bezug auf eine Referenz mit Hilfe des Einstellwerkzeugs einstellt;
- man - wenn die Komponente in der in Bezug auf die Referenz erwünschten Position ist - jede der drei Kugeleinheiten in der Position festspannt, die sie mittels ihres Kugelgelenkklemmsystems einnimmt;
- man die Verriegelungsglocken entriegelt;
- man das Einstellwerkzeug (50, 60) von der Einstellbank löst und die Komponente von ihm abmontiert;
- man die Komponente auf dem Träger anbringt.
